**Europäisches Patentamt**

**European Patent Office**

**Office européen des brevets**

(19)

(11) Publication number: **0 320 845**
**A1**

(12) # EUROPEAN PATENT APPLICATION

(21) Application number: **88120716.1**

(22) Date of filing: **12.12.88**

(51) Int. Cl.⁴: **B65G 19/02 , B65G 47/52**

(30) Priority: **16.12.87 IT 2289587 U**

(43) Date of publication of application:
**21.06.89 Bulletin 89/25**

(84) Designated Contracting States:
**DE ES FR GB**

(71) Applicant: **Anzani, Lanfranco**
**Via Villoresi 48**
**Parabiago(Milan)(IT)**

Applicant: **Anzani, Onorio**
**Via Statuto 33**
**Parabiago(Milan)(IT)**

(72) Inventor: **Anzani, Lanfranco**
**Via Villoresi 48**
**Parabiago(Milan)(IT)**
Inventor: **Anzani, Onorio**
**Via Statuto 33**
**Parabiago(Milan)(IT)**

(74) Representative: **Lecce, Giovanni**
**UFFICIO BREVETTI CALCIATI S.r.l. via G.**
**Negri,10**
**I-20123 Milano(IT)**

(54) **Mobile exchanges for conveyor lines of trolleys entering and leaving fixed containers.**

(57) Mobile exchange (16) for conveyor lines of trolleys enter-and leaving a fixed container (14) in a conveyor plant, comprising: a section of rail (30) supported by a bracket (1) fixed coaxially to a pin (3) of the conveyor plant near the entry and exit of the fixed container; means for the rotation of said bracket (1) round the pin (1); and means to move the trolleys comprising a belt (9) stretched between two pulleys (3) and (8) placed at the opposite end of the bracket (1), one of them a drive pulley.

The bracket (1) may be made rotate automatically round its core (2), placing the section of rail (30) in alignment with the fixed sections of rail (20) of the conveyor plant and those (15) of the fixed container (14).

_Fig.2_

# MOBILE EXCHANGES FOR CONVEYOR LINES OF TROLLEYS ENTERING AND LEAVING FIXED CONTAINERS

The present invention refers to a mobile exchange for conveyor lines of trolleys entering and leaving fixed containers.

More in particular, the present invention refers to a mobile exchange for conveyor lines of trolleys entering and leaving fixed containers, particularly suitable for application in a conveyor plant for lthe continuous manufacture of rubber footwear, such as rubber boots, rubber shoes and the like.

In many industrial activities, continuous plants for the production and treatment of products are present. For example, in the manufacture of leather products, or similar, such as footwear, treatments are provided during the production cycle, like vulcanization of rubber components, and similar, which, for their function, are fixed and need special working conditions.

In these case, at a certain point in the processing cycle, products are transferred from the production line in fixed containers, e.g. an autoclave, and kept there for a certain time required by the treatment.

To produce then extract said products from the autoclave, separate conveyance means are generally used which do not consent total automation of the processing cycles.

At the entrance and exit of the autoclaves or fixed treatment tanks, such as conditioning furnaces, manual means are used to transfer products, or, in the best solution, pieces of tippable rails are used, which can be manually aligned to each processing cycle of opening - loading - discharge -closing of said treatment tanks.

These means are not, however, effectively used in the automatic continuous plants in which products are conveyed from one processing station to the other automatically on trolleys and/or continuous rails.

In these plants, in fact, the products must on some way be transferred from external to internal trolleys, and viceversa, by means of lengthy, expensive manual operations, or the trolleys must be pushed by hand inside the containers and extracted in the same way, making them slide on said pieces of rail.

The object of the present invention is to eliminate the above problems.

More in particular, the object of the present invention is to provide an automatic mobile exchange which permits continuous, automatic conveyance of trolleys carrying products to and from treatment tanks or means fixed in a line for the continuous manufacture or treatments of products.

According to the present invention, this and other objects are obtained by means of a mobile exchange for the alignment and connection of the rails of a closed conveyor plant with those of a container or fixed means of treatment, aligned to said conveyor plant, comrises pieces of rail, supported by brackets rotating round a pin fixed to said conveyor plant near the fixed container and equipped with means of conveyance with belt; said pieces of rail being automatically alignable to the fixed tracks located outside and inside the fixed containers.

The conveyor belt comprises:
a drive pulley, keyed on the bracket pin, said pin being moved directly by the conveyor plant chain; an idle end pulley, and intermediate idle rollers, mounted on swinging levers, on which a belt is applied.

The brackets, and therefore the rails round the pin, are rotated by pneumatic or hydraulic pistons or other known mechanical means, when the doors of the container or fixed means of treatment are in open position.

The mobile exchange of the present invention is applied in sequence to the fixed pieces of rail, present and aligned to the outside and inside of the fixed containers, near the entries and exits. Alignment of the mobile exchange is obtained automatically, in sequence or in correspondence with the opening of the doors of said fixed containers./When the doors of the fixed containers are closed, the mobile exchange rotates automatically, moving away from the alignment of the fixed pieces of rail.

When the mobile exchanges are aligned to the fixed pieces of rail, the trolleys can slide freely and are started and guided in the passage from the outside to the inside of fixed containers, and viceversa, rapidly and simply.

The advantages of the present invention mainly consist in the fact that all entry and exit manoeuvres of the trolleys carrying products to be treated are automatic, fast and safe, consenting advantageous reductions of processing times and production costs.

The mobile exchange of the present invention can be better understood from the following detailed description, in which reference is made to the figures in the attached drawing which show a preferred form of construction, in which

- fig. 1 shows the schematic view in plan of a conveyor line of trolleys entering and leaving a fixed container, e.g. an autoclave, provided with the mobile exchange of the present invention, and

- fig. 2 shows the lateral schematic view of the mobile exchange applied at the entry and exit of an autoclave, for alignment between external and internal rails.

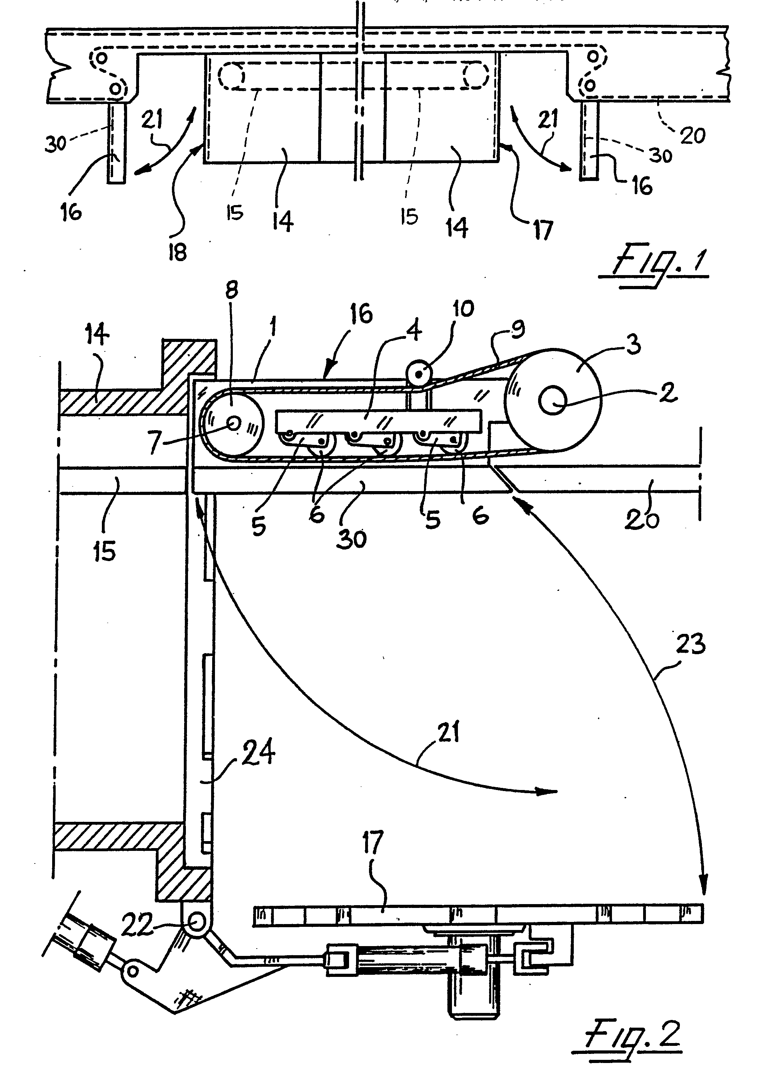

Figure 1 illustrates a part of a closed conveyor plant equipped with running and supporting rails (20) and corresponding conveyor chain, both indicated in dash dot lines. The conveyor plant conveys the trolleys or collecting frames through a processing cycle comprising a fixed tank (14) e.g. an autoclave or vulcanizing tank or the like.

As the container or tank must be closed at its ends during treatment, the rails (20) cannot run through the container or tank but must be replaced by other rails (15) placed inside said tank or container. The rails (20) of the conveyor plant are therefore deflected before and behind the tank (14) and preferably raised to a higher level for a section corresponding to the length of the tank or fixed container (14). At each of the two deflection points (31) of the rails (20) of the conveyor plant is keyed the mobile exchange (16) of the present invention, which makes it possible to align and connect the rails (20) of the conveyor plant with the internal rails (15) of the container or fixed tank (14).

The mobile exchange (16) for conveyor lines of trolleys entering or leaving fixed tanks (14), e.g. autcclaves or similar, comprises a section of rail (30) supported by a bracket (1) fixed coaxially to a pin (2) on which a drive pulley (3) is keyed.

The pin (2) receives the rotation command directly from the conveyor chain of the external pin (20). A support (4) is applied on the bracket (1), on which swinging levers (5) supporting the idle end rollers (6) are elastically fixed. At the opposite end, the bracket (1) supports a pin (7) on which the idle pulley (8) is keyed.

The pulleys (3) and (8) are connected by a belt (9), pushed outwards and in parallel alignment with the section of rail (30), by the idle rollers (5), and held in position by an adjustable rear stretcher (10).

When the doors (17) or (18) of the fixed container (14), e.g. an autoclave, are open, the section of rail (30) of each mobile exchange (16) is positioned in alignment with the external rails (20) and with the internal rail (15) by a command device, not illustrated, which may consist of a pneumatic or hydraulic piston, or other mechanical means suited to the purpose. With the mobile exchanges (16) in said position, the incoming trolleys, sliding on external rail (20), pass on that (30) of the mobile exchange (16) then on that 15) in the fixed container (14), pushed by the conveyor belt (9) which sticks to a part of their surface. In the same way, the trolleys inside the fixed container (14), e.g. an autoclave, are pushed out by those arriving and pass from the internal rail (15) to that (30) of the mobile exit exchange (16), and from here, still pushed by on the external rail (20), to continue along the route pre-established for any subsequent processing phases.

When all trolleys in the fixed container, or autoclave (14), have emerged and all those waiting have been loaded in the same container, as indicated above, the mobile exchanges (16) are made rotate outwards, in the direction of the arrow (21), then the doors (17) and (18) are made rotate round their cores (22), in the direction of the arrow (23), until they are engaged in their seats (24). In this position the doors are locked to close the entrance and discharge openings of the fixed container (14) to carry out treatments on the products supported by said trolleys. Also the opening and closing of the doors (17) and (18) is preferably carried out by means of pneumatic or hydraulic pistons or with other suitable mechanical means.

All the above movements are, at any rate, performed automacally with suitable control devices.

## Claims

1. Mobile exchange (16) for the alignment and connection of the rails (20) of a closed conveyor plant with those (15) of a tank or fixed container (14), said exchange being applied in sequence ro the rails (20) near the entry or exit of the tank or fixed container (14), characterized by the fact that said exchange comprises:
- a bracket (1) fixed at one end to a pin (2) of the conveyor plant near the container or fixed treatment tank (14), at the deflection point (31) of the rail (20);
- means for the rotation of said bracket (1) round the pin (2) to align it with the sections of rail (15) of the fixed container (14) or far from said sections of rail;
- a rotating pulley (3) keyed on the pin (2), said pin being driven by the chain of the rail (20) of the conveyor plant;
- a section of rail (30) supported by said bracket (1); and
- means to move the trclleys on said section of rail (30), comprising a belt (9) stretched between said rotating pulley (3) and an idle pulley (8) placed at the opposite end of the bracket (1).

2. Mobile exchange according to claim 1, in which the belt (9) is kept in parallel alignment with the section of rail (30) by means of idle rollers (6), said rollers being supported by swinging levers (5) fixed at one end on said bracket (1) and being positioned between the two pulleys (3) and (8).

3. Mobile exchange according to claim 1 or 2, in which the rotation of the bracket (1) to position the section of rail (30) in alignment with the rails (20) of the conveyor plant and the internal rails (15) of the container or fixed tank (14) takes place simultaneously to the opening of the doors (17) and (18) of said fixed container (14).

4. Mobile exchange according to any of the previous claims, in which the bracket (1) is rotated by pneumatic or hydraulic pistons.

5. Mobile exchange according to any of the previous claims, in which the doors (17) and (18) of the fixed containers (14) are opened and closed by pneumatic or hydrualic pistons.

6. Mobile exchange according to any of the previous claims, characterized by the fact that it is positioned in a closed conveyor plant near each end of the container or fixed tank (14) in which the rail (20) deflects.

_Fig.1_

_Fig.2_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-U-8 707 554 (VOGT-WERKE GmbH & CO. KG)<br>* Figures 1-8; page 5, last paragraph - page 10 *<br>--- | 1 | B 65 G 19/02<br>B 65 G 47/52 |
| Y | DE-B-1 168 336 (L. & C. STEINMÜLLER GmbH)<br>* Figure 1; column 2, line 39 - column 3, line 8 *<br>--- | 1 | |
| A | DE-U-8 606 808 (W. PAVEL)<br>* Figures 1,2; page 4, line 1 - page 6 *<br>--- | 1 | |
| A | FR-A-2 085 163 (COMPAGNIE GENERALE D'AUTOMATISME)<br>* Figures 1,2; pages 2, line 1 - page 3 *<br>----- | 2 | |

| | |
|---|---|
| | TECHNICAL FIELDS SEARCHED (Int. Cl.4) |
| | B 65 G<br>A 22 B |

The present search report has been drawn up for all claims

| Place of search | Date of completion of the search | Examiner |
|---|---|---|
| THE HAGUE | 13-03-1989 | WERNER D.M. |